# FASCICULE DE BREVET EUROPEEN

(11) **EP 2 693 919 B1**
(45) Date de publication et mention de la délivrance du brevet: **06.11.2019**
(21) Numéro de dépôt: 12711682.0
(22) Date de dépôt: 04.04.2012
(51) Int. Cl.: A47J 27/02, A47J 36/02

(54) **ARTICLE CULINAIRE A DOUBLE PAROI**
DOPPELWANDIGER KÜCHENARTIKEL
DOUBLE-WALLED CULINARY ARTICLE

(30) Priorité: 07.04.2011 FR 1153026
(43) Date de publication de la demande: 12.02.2014
(73) Titulaire: SEB S.A., 69130 Ecully (FR)
(72) Inventeur: TUFFE, Stéphane, 73160 Cognin (FR); ALLEMAND, Simon, 74150 Rumilly (FR)
(74) Mandataire: Bourrières, Patrice
(86) Numéro de dépôt international: PCT/EP2012/056242
(87) Numéro de publication internationale: WO 2012/136743

(56) Documents cités:
- FR-A1- 2 647 003
- GB-A- 2 034 173
- US-A1- 2008 118 763

## Description

La présente invention concerne le domaine technique des articles culinaires formant un récipient de cuisson.

La présente invention concerne plus particulièrement les articles culinaires formant un récipient de cuisson à double paroi.

La présente invention concerne notamment, mais non exclusivement, les articles culinaires de type poêle présentant une double paroi. La présente invention trouve un intérêt particulier pour les articles culinaires de type wok. Les woks de type traditionnel présentent une surface de cuisson concave incurvée du centre vers la périphérie, avec un bord supérieur évasé. Les woks de type poêle wok présentent un fond plan raccordé à une paroi paroi latérale incurvée formant au moins un tiers du rayon de l'article culinaire. Leur bord supérieur peut être plus vertical.

La cuisson sautée au wok consiste à cuire rapidement à feu vif les aliments coupés finement, en les remuant constamment, du centre vers les bords. Ce remuage sollicite la surface de cuisson du wok.

Le document FR2647003 divulgue un article culinaire de type wok à double paroi, comportant une paroi intérieure prévue pour contenir les aliments à cuire, réalisée en aluminium ou en acier inoxydable, une paroi extérieure prévue pour être chauffée, réalisée en acier, dans lequel une lame d'air est ménagée entre la paroi intérieure et la paroi extérieure. L'assemblage des bords extérieurs des deux parois peut être réalisé par roulage, sertissage ou cerclage. Une telle construction vise à éviter les risques de surchauffe de la paroi intérieure, notamment pour permettre de recouvrir la face intérieure de cuisson de la paroi intérieure d'un revêtement PTFE.

Un inconvénient de la réalisation précitée réside dans la résistance limitée du revêtement PTFE à l'abrasion, notamment lors des cuissons avec remuage à l'aide d'un ustensile manipulé par l'utilisateur.

Un autre inconvénient de la réalisation précitée réside dans le coût d'un article culinaire dont la surface de cuisson réalisée en aluminium ou en acier inoxydable est recouverte de PTFE.

Le document US2008/118763A1 divulgue un article culinaire dont les faces extérieure et intérieure sont nitrocarburées et post-oxydées.

Un objet de la présente invention est de proposer un article culinaire à double paroi, dont la surface de cuisson est adaptée à la réalisation de cuissons avec remuage à l'aide d'un ustensile manipulé par l'utilisateur.

Un autre objet de la présente invention est de proposer un article culinaire à double paroi, qui est adapté aux températures de cuisson élevées rencontrées dans une cuisson sautée ou rissolée.

Un autre objet de la présente invention est de proposer un article culinaire à double paroi, qui présente une résistance à la corrosion satisfaisante.

Un autre objet de la présente invention est de proposer un article culinaire à double paroi, dont le coût est peu élevé.

Ces buts sont atteints avec un article culinaire à double paroi comportant une paroi intérieure prévue pour contenir les aliments à cuire, une paroi extérieure prévue pour être chauffée, une lame d'air étant ménagée entre la paroi intérieure et la paroi extérieure, la paroi intérieure et la paroi extérieure étant assemblées de manière étanche du fait que :
- la paroi intérieure et la paroi extérieure sont assemblées par soudage,
- la paroi intérieure est réalisée en acier ordinaire et présente une face intérieure de cuisson nitrocarburée et post-oxydée.,
- la paroi intérieure présente une face extérieure nitrocarburée et post-oxydée,
- la paroi extérieure est réalisée en acier ordinaire et présente une face extérieure de chauffe nitrocarburée et post-oxydée,
- la paroi extérieure présente une face intérieure nitrocarburée et post-oxydée,
- la paroi extérieure présente un orifice,
- l'orifice ménagé dans la paroi extérieure permettant de mettre en communication la face intérieure de la paroi extérieure et la face extérieure de la paroi intérieure avec le milieu de nitrocarburation, l'orifice étant rebouché après les traitements de nitrocarburation et de post-oxydation.

Un article culinaire à double paroi formant un seul élément peut ainsi être obtenu. Le traitement de nitrocarburation et de post-oxydation des faces externes de l'article culinaire permet d'obtenir une bonne résistance à la corrosion, aux chocs et aux rayures. La nitrocarburation effectuée sur les deux faces de la paroi intérieure et de la paroi extérieure permet de n'avoir aucune déformation desdites faces après le traitement de nitrocarburation.

La paroi intérieure et la paroi extérieure peuvent être embouties avant l'assemblage par soudage. Cette forme de réalisation est bien adaptée à une nitrocarburation par voie gazeuse ou ionique, l'orifice ménagé dans la paroi extérieure permettant de mettre en communication les faces internes de la paroi extérieure et de la paroi intérieure avec le milieu de nitrocarburation. De plus la nitrocarburation gazeuse ou ionique permet d'assurer un meilleur contrôle de la couche de combinaison formée qui confère la dureté.

Ainsi l'utilisation d'une surface de cuisson en acier ordinaire nitrocarburée et post-oxydée permet d'obtenir une surface de cuisson mécaniquement résistante, apte à être utilisée à des températures de cuisson élevées, notamment pour rissoler ou frire, présentant une tenue à la corrosion satisfaisante, avec un coût peu élevé. La surface de cuisson proposée est tout à fait adaptée à la réalisation de cuissons avec remuage à l'aide d'un ustensile manipulé par l'utilisateur.

Avantageusement alors, au moins un organe de préhension est assemblé avec la paroi intérieure par un rivet traversant un perçage de la paroi intérieure au dessus de la paroi extérieure. Cette disposition permet d'assembler un organe de préhension de manière économique. De préférence, la paroi intérieure comporte deux organes de préhension opposés.

Avantageusement, la hauteur de la paroi extérieure est supérieure à la demi-hauteur de la paroi intérieure. Ainsi la plus grande partie de la face extérieure de l'article culinaire présente une double paroi. Cette disposition permet de limiter les pics de températures lors d'un chauffage sur une flamme, par exemple au gaz.

L'invention sera mieux comprise à l'étude de quatre exemples de réalisation, pris à titre nullement limitatif, illustrés dans les figures annexées, dans lesquelles :
- la figure 1 illustre un premier exemple de réalisation d'un article culinaire à double paroi selon l'invention,
- la figure 2 illustre un détail de l'assemblage du premier exemple de réalisation illustré sur la figure 1,
- la figure 3 illustre un deuxième exemple de réalisation d'un article culinaire à double paroi,
- la figure 4 illustre un détail de l'assemblage du deuxième exemple de réalisation illustré sur la figure 3,
- la figure 5 illustre un troisième exemple de réalisation d'un article culinaire à double paroi,
- la figure 6 illustre un quatrième exemple de réalisation d'un article culinaire à double paroi.

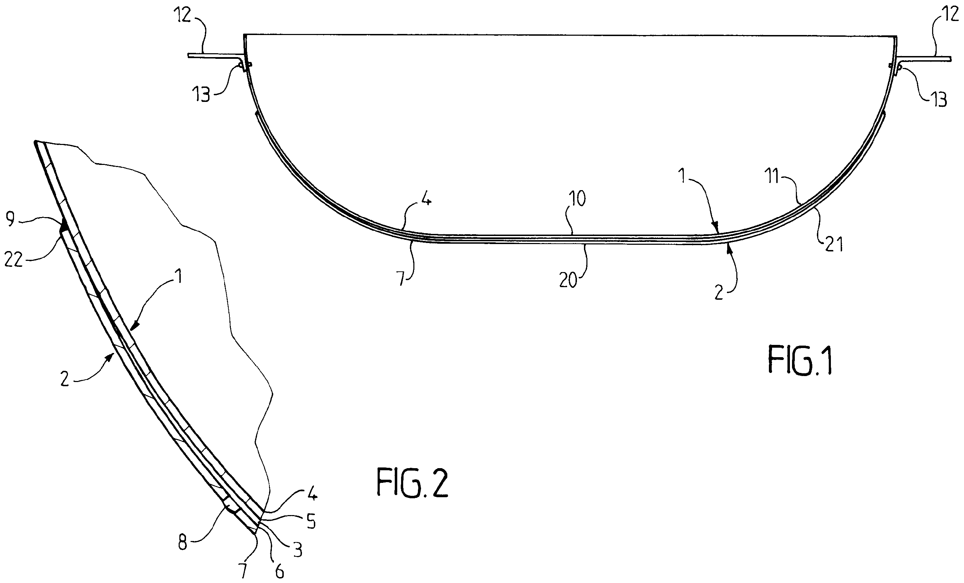

Les exemples de réalisation illustrés sur les figures 1 à 6 concernent un article culinaire à double paroi, comportant une paroi intérieure 1 ; 1' prévue pour contenir les aliments à cuire, et une paroi extérieure 2 ; 2' prévue pour être chauffée, dans lequel une lame d'air 3 ; 3' est ménagée entre la paroi intérieure 1 ; 1' et la paroi extérieure 2 ; 2'.

La paroi intérieure 1 ; 1' présente une face intérieure de cuisson 4 ; 4', ainsi qu'une face extérieure 5 ; 5' enveloppée au moins partiellement par la paroi extérieure 2 ; 2'. L'épaisseur de la paroi intérieure 1 ; 1' est de préférence inférieure à 1,6 mm et avantageusement comprise entre 0,4 et 1,2 mm. Le matériau de la paroi intérieure 1 ; 1' est choisi parmi les aciers ordinaires. Le matériau de la paroi intérieure 1 ; 1' est choisi de préférence parmi les aciers présentant de bonnes propriétés d'emboutissage. Notamment, le matériau de la paroi intérieure 1 ; 1' peut être choisi parmi les aciers bas carbone ordinaires, tel que par exemple le DC04. Le matériau de la paroi intérieure 1 ; 1' peut aussi être choisi parmi les aciers alliés comportant une résistance à la corrosion un peu plus élevée, sans pour autant entrer dans la catégorie des aciers inoxydables, tel que par exemple le 15CDV6.

Dans l'article culinaire selon l'invention, la face intérieure de cuisson 4 ; 4' est nitrocarburée et post-oxydée.

La paroi extérieure 2 ; 2' présente une face intérieure 6 ; 6' et une face extérieure de chauffe 7 ; 7'. La face intérieure 6 ; 6' enveloppe au moins partiellement la paroi intérieure 1 ; 1'. Le matériau de la paroi extérieure 2 ; 2' est précisé dans les exemples de réalisation décrits ci-après.

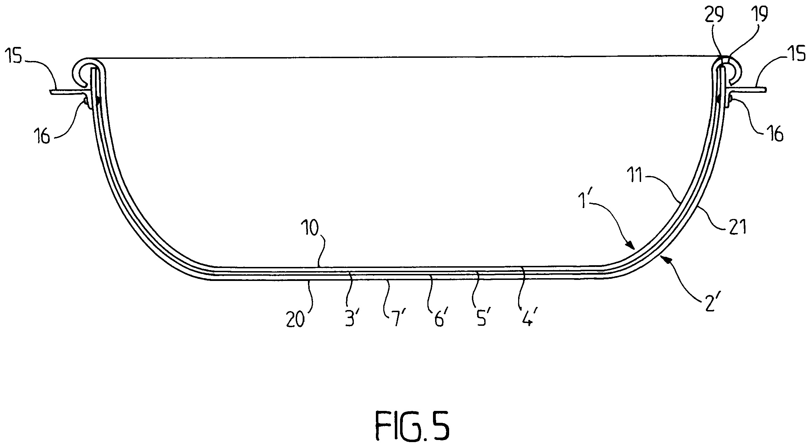

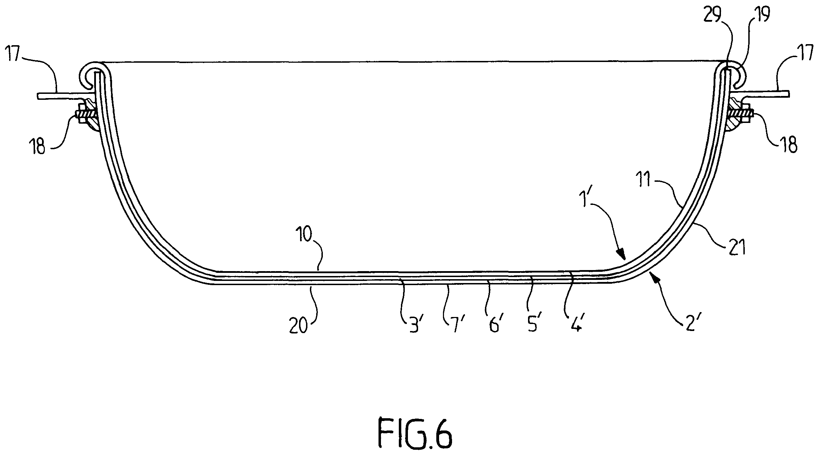

La paroi intérieure 1 ; 1' et la paroi extérieure 2 ; 2' présentent avantageusement une géométrie circulaire. La paroi intérieure 1 ; 1' et la paroi extérieure 2 ; 2' comportent chacune un fond 10, 20 sensiblement plan auquel est raccordé une paroi latérale incurvée 11, 21. La courbure de la paroi latérale incurvée 11, 21 peut être régulière, tel que représenté sur les figures 1 à 4, ou progressive, tel que représenté sur les figures 5 et 6. La face intérieure de cuisson 4 ; 4' forme ainsi une surface de cuisson présentant une forme concave, et la face extérieure de chauffe 7 ; 7' forme une surface de chauffe présentant une forme convexe.

De manière préférée, la hauteur de la paroi extérieure 2 ; 2' est supérieure à la demi-hauteur de la paroi intérieure 1 ; 1'. Ainsi une partie importante de la paroi latérale incurvée 11, 21 de l'article culinaire présente une double paroi 1, 2 ; 1', 2' séparée par la lame d'air 3 ; 3'.

Dans un premier mode de réalisation illustré sur les figures 1 à 4, la paroi intérieure 1 et la paroi extérieure 2 sont assemblées de manière étanche pour ménager la lame d'air 3 entre la paroi intérieure 1 et la paroi extérieure 2. La paroi extérieure 2 est réalisée en acier ordinaire. La paroi intérieure 1 et la paroi extérieure 2 peuvent ainsi être obtenues chacune par emboutissage d'un disque d'acier ordinaire. L'épaisseur de la paroi extérieure 2 est de préférence inférieure à 1,6 mm et avantageusement comprise entre 0,4 et 1,2 mm.

Le diamètre extérieur de la paroi intérieure 1 est par exemple de 300 mm pour une hauteur de 93 mm. Le diamètre extérieur de la paroi extérieure 2 est par exemple de 294 mm pour une hauteur de 57 mm. L'épaisseur de la lame d'air 3 entre les fonds 10, 20 est de préférence inférieure à 1,6 mm et diminue entre les parois latérales 11, 21 jusqu'à la zone d'assemblage de la paroi intérieure 1 et de la paroi extérieure 2.

Les opérations de nitrocarburation et de post-oxydation sont effectuées après la découpe et l'emboutissage des disques d'acier ordinaire. De ce fait, dans le premier mode de réalisation concernant un assemblage étanche de la paroi intérieure 1 et de la paroi extérieure 2, au moins la face extérieure de chauffe 7 et la face intérieure de cuisson 4 sont nitrocarburées et post-oxydées.

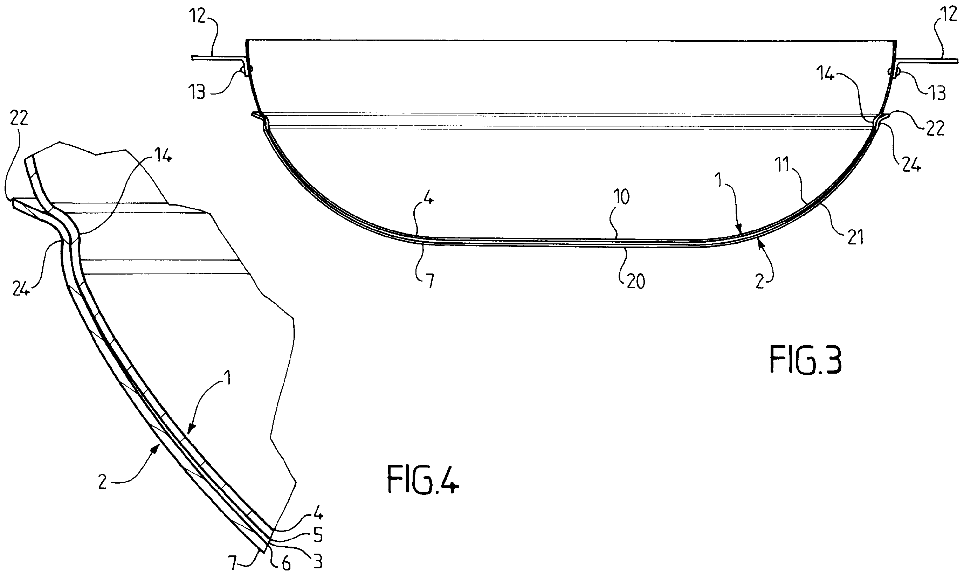

Tel qu'illustré sur les figures 1 et 3, la paroi intérieure 1 présente au moins un perçage au dessus de la paroi extérieure 2. Un organe de préhension 12 est assemblé avec la paroi intérieure 1 par un rivet 13 traversant le perçage. Avantageusement, la paroi intérieure 1 comporte deux organes de préhension 12 opposés montés sur la face extérieure 5 de la paroi intérieure 1. Ainsi les organes de préhension 12 sont montés sur la face externe concave de l'article culinaire.

Dans le premier exemple de réalisation illustré sur les figures 1 et 2, la paroi intérieure 1 et la paroi extérieure 2 sont assemblées par soudage. Les opérations de nitrocarburation et de post-oxydation interviennent de préférence après l'assemblage de la paroi intérieure 1 et de la paroi extérieure 2.

Pour permettre le traitement des parties de la face extérieure 5 de la paroi intérieure 1 et de la face intérieure 6 de la paroi extérieure 2 assemblées formant la lame d'air 3, un perçage de la paroi extérieure 2 est effectué pour former un orifice 8. Le diamètre de l'orifice 8 est de préférence inférieur ou égal à 3 mm.

La paroi intérieure 1 et la paroi extérieure 2 sont ensuite assemblées au moyen d'un cordon de soudure 9, de préférence au niveau d'un bord supérieur 22 de la paroi extérieure 2. Le soudage peut être effectué notamment par laser, ou encore par procédé TiG ou MiG.

Une nitrocarburation gaseuse suivie d'une post-oxydation gazeuse est réalisée pour la paroi intérieure 1 et la paroi extérieure 2 assemblées. Ainsi la face extérieure 5 de la paroi intérieure 1 et la face intérieure 6 de la paroi extérieure 2 sont nitrocarburées et post-oxydées, après assemblage. A titre de variante une nitrocarburation ionique et/ou une post-oxydation ionique peuvent être envisagées.

La réalisation d'un traitement de nitrocarburation suivi d'un traitement de post-oxydation sur la paroi intérieure 1 et la paroi extérieure 2 assemblées permet d'améliorer les propriétés de tenue à la corrosion de l'article culinaire. Les faces externes de l'article culinaire, formées par la face intérieure de cuisson 4 et la face extérieure de chauffe 7, mais aussi les faces internes de l'article culinaire, formées par la face extérieure 5 de la paroi intérieure 1 et la face intérieure 6 de la paroi extérieure 2, présentent une couche intermédiaire nitrurée comportant des nitrures de fer Fe_{2,3}N, recouverte d'une couche surfacique oxydée comportant des oxydes de fer Fe₃O₄. Le traitement de post-oxydation permet d'obtenir une coloration noire pour la face intérieure de cuisson 4 et la face extérieure de chauffe 7.

Après les traitements de nitrocarburation et de post-oxydation, l'orifice 8 est ensuite rebouché, par exemple avec de la soudure. La paroi extérieure 2 de l'article culinaire à double paroi obtenu présente un orifice 8 rebouché.

Une épaisseur de lame d'air 3 de l'ordre de 1 mm dans la zone du fond 10, 20 permet d'obtenir des propriétés de chauffe assez proches d'un article culinaire à simple paroi, tout en réduisant les points chauds sur la face intérieure de cuisson 4. Avec un article culinaire à simple paroi de 1,2 mm contenant 200 ml d'huile placé sur un foyer gaz de 3000 W d'un diamètre de 10 cm, de la fumée est observée après 3 minutes de chauffe, alors que la température de l'huile ne dépasse pas 160°C. Avec un article culinaire à double paroi de 1,2 mm chacune présentant une épaisseur de lame d'air 3 de l'ordre de 1 mm dans la zone du fond 10, 20 entre les deux parois, de la fumée est observée après 8 minutes de chauffe, alors que la température de l'huile est supérieure à 250°C. Ainsi pour une température d'huile inférieure à 210°C l'apparition de fumée peut être évitée dans un article culinaire à double paroi. L'ébullition peut être atteinte lors de la chauffe d'un litre d'eau, ce qui permet d'envisager différents types de cuisson, notamment la cuisson vapeur et la cuisson sautée ou rissolée.

Une épaisseur de lame d'air 3 de l'ordre de 2,5 mm dans la zone du fond 10, 20 permet aussi d'éviter l'apparition de fumée pour une température d'huile inférieure à 210°C. Toutefois la vitesse de chauffe est diminuée et la chauffe d'un litre d'eau ne permet pas l'ébullition. Ainsi une épaisseur moyenne de lame d'air 3 dans la zone du fond 10, 20 inférieure à 1,6 mm et supérieure à 0,6 mm est préférée.

Le deuxième exemple de réalisation illustré sur les figures 3 et 4 diffère du premier exemple de réalisation illustré sur les figures 1 et 2 en ce que la paroi intérieure 1 et la paroi extérieure 2 sont assemblées par clipsage.

A cet effet une gorge annulaire interne 14 est formée sur la paroi intérieure 1, et un embouti annulaire interne 24 est formé sur la paroi extérieure 2. De préférence, l'embouti annulaire interne 24 est réalisé au niveau du bord supérieur 22 de la paroi extérieure 2. L'embouti annulaire interne 24 de la paroi extérieure 2 est inséré dans la gorge annulaire interne 14 de la paroi intérieure 1.

Dans le deuxième exemple de réalisation, les opérations de nitrocarburation et de post-oxydation sont effectuées sur la paroi intérieure 1 et la paroi extérieure 2 de préférence avant l'assemblage de la paroi intérieure 1 et de la paroi extérieure 2. Ainsi la face extérieure 5 de la paroi intérieure 1 et la face intérieure 6 de la paroi extérieure 2 sont nitrocarburées et post-oxydées, avant assemblage.

Une nitrocarburation en bain de sels suivie d'une post-oxydation en bain de sels peut avantageusement être réalisée pour la paroi intérieure 1 et la paroi extérieure 2. Le traitement de nitrocarburation peut notamment être réalisé en bain de sels comportant des cyanates alcalins après un préchauffage à l'air entre 350°C et 400°C. La température du bain de nitrocarburation est par exemple de 580°C. Le traitement de post-oxydation peut aussi être réalisé en bain de sels, par exemple être réalisé dans un bain de refroidissement présentant une température comprise entre 350°C et 400°C. Selon les conditions du traitement de nitrocarburation, une couche de braunite peut apparaître sous la couche intermédiaire nitrurée.

A titre de variante une nitrocarburation gazeuse ou nitrocarburation ionique et/ou une post-oxydation gazeuse ou post-oxydation ionique peuvent être envisagées.

Si désiré, un joint annulaire (non représenté sur la figure 2) peut être intercalé entre la paroi extérieure 2 et la paroi intérieure 1 assemblées.

Dans un second mode de réalisation illustré sur les figures 5 et 6, la paroi intérieure 1' est amovible par rapport à la paroi extérieure 2'. Ainsi la paroi extérieure 2' prévue pour être chauffée est indépendante de la paroi intérieure 1' prévue pour contenir les aliments.

Des opérations de nitrocarburation et de post-oxydation sont effectuées sur la paroi intérieure 1' réalisée en acier ordinaire. Ainsi la paroi intérieure 1' présente une face extérieure 5' nitrocarburée et post-oxydée.

Avantageusement, la paroi intérieure 1' présente un organe de centrage périphérique 19 reposant sur un rebord d'appui 29 de la paroi extérieure 2'. Ainsi le rebord d'appui 29 porte l'organe de centrage périphérique 19. La paroi intérieure 1' et la paroi extérieure 2' sont centrées l'une par rapport à l'autre lorsque la paroi intérieure 1' est portée par la paroi extérieure 2'. Un positionnement précis de la paroi intérieure 1' dans la paroi extérieure 2' peut être obtenu, ce positionnement permettant de définir la lame d'air 3.

Selon la forme de réalisation préférée représentée sur les figures 5 et 6, l'organe de centrage périphérique 19 est formé par un bord supérieur roulé de la paroi intérieure 1', et le rebord d'appui 29 est formé par un bord supérieur sensiblement vertical de la la paroi extérieure 2'. La courbure de la paroi latérale incurvée 11, 21 diminue progressivement à partir du fond 10, 20. L'épaisseur de la lame d'air 3' peut rester constante au niveau de la paroi latérale incurvée 11, 21 comme du fond 10, 20. Une épaisseur moyenne de lame d'air 3' inférieure à 1,6 mm et supérieure à 0,6 mm est préférée.

Dans le troisième exemple de réalisation illustré sur la figure 5, la paroi extérieure 2' est réalisée en acier ordinaire. L'épaisseur de la paroi extérieure 2' est de préférence inférieure à 1,6 mm et avantageusement comprise entre 0,4 et 1,2 mm. Les opérations de nitrocarburation et de post-oxydation sont effectuées aussi sur la paroi extérieure 2'. Ainsi la face extérieure de chauffe 7' et la face interne de la paroi extérieure 2' sont nitrocarburées et post-oxydées.

Tel que représenté sur la figure 5, au moins un organe de préhension 15 est assemblé avec la paroi intérieure 1' par un rivet 16 traversant un perçage de la paroi extérieure 2. La paroi extérieure 2 présente de préférence deux organes de préhension 15 opposés montés sur la face extérieure de chauffe 7'.

Dans le quatrième exemple de réalisation illustré sur la figure 6, la paroi extérieure 2' est réalisée en aluminium. L'épaisseur de la paroi extérieure 2' est de préférence inférieure à 5 mm et avantageusement comprise entre 1 et 4 mm.

Tel que représenté sur la figure 6, au moins un organe de préhension 17 est monté sur un goujon 18 soudé sur la face extérieure de chauffe 7' de la paroi extérieure 2'. La paroi extérieure 2' présente de préférence deux organes de préhension 17 opposés montés sur la face extérieure de chauffe 7'.

A titre de variante, la paroi extérieure 2 ; 2' et/ou la paroi intérieure 1 ; 1' ne présentent pas nécessairement un fond sensiblement plan. Notamment, la paroi intérieure 1 ; 1' peut former une surface de cuisson concave incurvée du centre vers la périphérie et/ou la paroi extérieure 2 ; 2' peut former une surface de chauffe convexe incurvée du centre vers la périphérie.

A titre de variante, la paroi extérieure 2 ; 2' et/ou la paroi intérieure 1 ; 1' peuvent présenter un bord supérieur évasé.

A titre de variante, le ou les organes de préhension 12 ; 15 ; 17 ne sont pas nécessairement rapportés. La paroi extérieure 2 ; 2' et/ou la paroi intérieure 1 ; 1' peuvent présenter un ou plusieurs organes de préhension intégrés, obtenus par exemple par emboutissage.

A titre de variante pour le premier exemple de réalisation, l'orifice 8 rebouché pourrait être ménagé dans la paroi intérieure 1 ou encore entre la paroi extérieure 2 et la paroi intérieure 1. Si désiré, plusieurs orifices 8 rebouchés peuvent être prévus.

A titre de variante pour le premier mode de réalisation, si désiré le ou au moins l'un des organes de préhension 12 est assemblé avec la paroi intérieure 1 par un rivet 13 traversant un perçage de la paroi intérieure 1 au dessus de la paroi extérieure 2 et par au moins un autre rivet traversant un autre perçage de la paroi intérieure 1 au dessus de la paroi extérieure 2. De préférence un ou deux autres rivets peuvent être prévus en complément du rivet 13 pour le ou au moins l'un des organes de préhension 12.

A titre de variante pour le troisième exemple de réalisation, si désiré le ou au moins l'un des organes de préhension 15 est assemblé avec la paroi extérieure 2' par un rivet 16 traversant un perçage de la paroi extérieure 2' et par au moins un autre rivet traversant un autre perçage de la paroi extérieure 2'. De préférence un ou deux autres rivets peuvent être prévus en complément du rivet 16 pour le ou au moins l'un des organes de préhension 15.

A titre de variante pour le deuxième mode de réalisation, l'organe de centrage périphérique 19 de la paroi intérieure 1' n'est pas nécessairement formé par un bord supérieur roulé de la paroi intérieure 1', mais peut par exemple être formé par une collerette extérieure de la paroi intérieure 1' inclinée vers le bas en direction de la périphérie.

A titre de variante pour le deuxième mode de réalisation, l'organe de centrage périphérique 19 de la paroi intérieure 1' n'est pas nécessairement formé par un bord supérieur de la paroi intérieure 1'. L'organe de centrage périphérique 19 de la paroi intérieure 1' peut notamment être formé sur la face extérieure 5' de de la paroi intérieure 1', de préférence dans la moitié supérieure de la paroi intérieure 1'.

A titre de variante pour le deuxième mode de réalisation, l'organe de centrage périphérique 19 de la paroi intérieure 1' n'est pas nécessairement annulaire. L'organe de centrage périphérique 19 de la paroi intérieure 1' peut notamment comporter au moins deux portions de paroi inclinée, de préférence au moins trois, prévues pour centrer la paroi intérieure 1' dans la paroi extérieure 2'.

A titre de variante pour le deuxième mode de réalisation, l'organe de centrage périphérique 19 de la paroi intérieure 1' pourrait être formé par des conformations de centrage externes prévues pour venir en appui sur le rebord d'appui 29 de la paroi extérieure 2'.

A titre de variante pour le deuxième mode de réalisation, le rebord d'appui 29 de la paroi extérieure 2' n'est pas nécessairement formé par un bord supérieur sensiblement vertical de la paroi extérieure 2'. Le rebord d'appui 29 de la paroi extérieure 2' peut notamment être formé par un bord supérieur évasé de la paroi extérieure 2'.

A titre de variante pour le deuxième mode de réalisation, le rebord d'appui 29 de la paroi extérieure 2' n'est pas nécessairement formé par un bord supérieur de la paroi extérieure 2'. Le rebord d'appui 29 de la paroi extérieure 2' peut notamment être formé sur la face intérieure 6' de la paroi extérieure 2', de préférence dans la moitié supérieure de la paroi extérieure 2'.

A titre de variante pour le deuxième mode de réalisation, le rebord d'appui 29 de la paroi extérieure 2' n'est pas nécessairement annulaire. Le rebord d'appui 29 de la paroi extérieure 2' peut notamment comporter aux moins deux zones d'appui, de préférence au moins trois, prévues pour porter chacune l'organe de centrage périphérique 19 de la paroi intérieure 1'.

A titre de variante pour le deuxième mode de réalisation, le rebord d'appui 29 de la paroi extérieure 2' pourrait être formé par une ou plusieurs conformations de centrage internes prévues pour porter l'organe de centrage périphérique 19 de la paroi intérieure 1'.

La présente invention n'est nullement limitée aux exemples de réalisation décrits, mais englobe de nombreuses modifications dans le cadre des revendications.

## Revendications

1. Article culinaire à double paroi comportant une paroi intérieure (1) prévue pour contenir les aliments à cuire, une paroi extérieure (2) prévue pour être chauffée, une lame d'air (3) étant ménagée entre la paroi intérieure (1) et la paroi extérieure (2), la paroi intérieure (1) et la paroi extérieure (2) étant assemblées de manière étanche, **caractérisé en ce que** la paroi intérieure (1) et la paroi extérieure (2) sont assemblées par soudage, **en ce que** la paroi intérieure (1) est réalisée en acier ordinaire et présente une face intérieure de cuisson (4) nitrocarburée et post-oxydée, **en ce que** la paroi intérieure (1) présente une face extérieure (5) nitrocarburée et post-oxydée, **en ce que** la paroi extérieure (2) est réalisée en acier ordinaire et présente une face extérieure de chauffe (7) nitrocarburée et post-oxydée, **en ce que** la paroi extérieure (2) présente une face intérieure (6) nitrocarburée et post-oxydée, et **en ce que** la paroi extérieure (2) présente un orifice (8), l'orifice (8) ménagé dans la paroi extérieure (2) permettant de mettre en communication la face intérieure (6) de la paroi extérieure (2) et la face extérieure (5) de la paroi intérieure (1) avec le milieu de nitrocarburation, l'orifice (8) étant rebouché après les traitements de nitrocarburation et de post-oxydation.

2. Article culinaire à double paroi selon la revendication 1, **caractérisé en ce que** l'orifice (8) est rebouché avec de la soudure.

3. Article culinaire à double paroi selon l'une des revendications 1 ou 2, **caractérisé en ce qu'**au moins un organe de préhension (12) est assemblé avec la paroi intérieure (1) par un rivet (13) traversant un perçage de la paroi intérieure (1) au-dessus de la paroi extérieure (2).

4. Article culinaire à double paroi selon l'une des revendications 1 à 3, **caractérisé en ce que** la hauteur de la paroi extérieure (2) est supérieure à la demi-hauteur de la paroi intérieure (1).

## Patentansprüche

1. Doppelwandiger Küchenartikel, aufweisend eine innere Wand (1), die vorgesehen ist, um kochende Nahrungsmittel aufzunehmen, eine äußere Wand (2), die vorgesehen ist, um erhitzt zu werden, einen Luftzwischenraum (3), der zwischen der inneren Wand (1) und der äußeren Wand (2) untergebracht ist, wobei die innere Wand (1) und die äußere Wand (2) dicht zusammengefügt sind, **dadurch gekennzeichnet, dass** die innere Wand (1) und die äußere Wand (2) durch Verschweißen zusammengefügt sind, dass die innere Wand (1) aus gewöhnlichem Stahl hergestellt ist und eine nitrocarburierte und nachoxidierte innere Kochseite (4) vorweist, dass die innere Wand (1) eine nitrocarburierte und nachoxidierte äußere Seite (5) vorweist, dass die äußere Wand (2) aus gewöhnlichem Stahl hergestellt ist und eine nitrocarburierte und nachoxidierte äußere Heizseite (7) vorweist, und dass die äußere Wand (2) eine Öffnung (8) vorweist, wobei die Öffnung (8), die in der äußeren Wand untergebracht ist, es ermöglicht, die innere Seite (6) der äußeren Wand (2) und die äußere Seite (5) der inneren Wand (1) mit dem Nitrocarburierungsmedium in Verbindung zu bringen, wobei die Öffnung (8) nach den Behandlungen zur Nitrocarburierung und Postoxidation wieder verstopft ist.

2. Doppelwandiger Küchenartikel nach Anspruch 1, **dadurch gekennzeichnet, dass** die Öffnung (8) mit einer Verschweißung verstopft ist.

3. Doppelwandiger Küchenartikel nach einem der Ansprüche 1 oder 2, **dadurch gekennzeichnet, dass** mindestens ein Greifelement (12) mit der inneren Wand (1) durch einen Niet (13) zusammengefügt ist, der durch eine Öffnung in der inneren Wand (1) über der äußeren Wand (2) verläuft.

4. Doppelwandiger Küchenartikel nach einem der Ansprüche 1 bis 3, **dadurch gekennzeichnet, dass** die Höhe der äußeren Wand (2) größer als die halbe Höhe der inneren Wand (1) ist.

## Claims

1. Two-walled cooking utensil comprising an inner wall (1) provided to contain food to cook, an outer wall (2) provided to be heated, an air gap (3) being arranged between the inner wall (1) and the outer wall (2), the inner wall (1) and the outer wall (2) being assembled sealed, **characterised in that** the inner wall (1) and the outer wall (2) are assembled by welding, **in that** the inner wall (1) is made of normal steel and has a nitrocarburized and post-oxidised inner cooking face (4), **in that** the inner wall (1) has a nitrocarburized and post-oxidised outer face (5), **in that** the outer wall (2) is made of normal steel and has a nitrocarburized and post-oxidised outer heating face (7), **in that** the outer wall (2) has a nitrocarburized and post-oxidised inner face (6), and **in that** the outer wall (2) has an orifice (8), the orifice (8) arranged in the outer wall (2) making it possible to put in communication the inner face (6) of the outer wall (2) and the outer wall (5) of the inner wall (1) with the nitrocarburizing environment, the orifice (8) being sealed after nitrocarburizing and post-oxidising treatments.

2. Two-walled cooking utensil according to claim 1, **characterised in that** the orifice (8) is sealed with welding.

3. Two-walled cooking utensil according to any of claims 1 or 2, **characterised in that** at least one gripping member (12) is assembled with the inner wall (1) by a rivet (13) passing through a bore of the inner wall (1) above the outer wall (2).

4. Two-walled cooking utensil according to any of claims 1 to 3, **characterised in that** the height of the outer wall (2) is greater than the half-height of the inner wall (1).
